# EUROPÄISCHE PATENTSCHRIFT

(11) **EP 0 547 563 B1**
(45) Veröffentlichungstag und Bekanntmachung des Hinweises auf die Patenterteilung: **06.03.1996**
(21) Anmeldenummer: 92121330.2
(22) Anmeldetag: 15.12.1992
(51) Int. Cl.: H01Q 7/00, H01Q 1/38

(54) **Leiterplattenantenne**
Printed circuit board antenna
Antenna à plaquette à circuit imprimé

(30) Priorität: 16.12.1991 DE 9115582 U
(43) Veröffentlichungstag der Anmeldung: 23.06.1993
(73) Patentinhaber: SIEMENS AKTIENGESELLSCHAFT, D-80333 München (DE)
(72) Erfinder: Pigler, Harald, Dipl.-Ing., W-8551 Röttenbach (DE); Knospe, Jürgen, Dipl.-Ing., W-8508 Wendelstein (DE)

(56) Entgegenhaltungen:
- EP-A- 0 060 628
- GB-A- 1 546 571
- PATENT ABSTRACTS OF JAPAN vol. 7, no. 247 (E-208)(1392) 2. November 1983 & JP-A-58 134 505 (MITSUBISHI)
- PATENT ABSTRACTS OF JAPAN vol. 8, no. 44 (E-229)(1481) 25. Februar 1984 & JP-A-58 198 902 ( TDK)
- PATENT ABSTRACTS OF JAPAN vol. 8, no. 99 (E-243)(1536) 10. Mai 1984 &JP-A-59 017 705 (TDK)

## Beschreibung

Komponenten, Geräte und Systeme zur Verarbeitung von Daten sind manchmal für einen mobilen Einsatz ausgelegt. Wesentliche Voraussetzung für die Ortsungebundenheit ist das Fehlen von starren Kabelverbindungen. Zur Energieversorgung und insbesondere zum Datenaustausch müssen derartige Geräte über kabellos arbeitende Mittel verfügen.

Als eines von vielen möglichen Geräten dieser Art seien beispielhaft sogenannte mobile Datenspeicher genannt. Diese können z.B. als Bestandteil eines Identifikationssystemes in einer vollautomatisch betriebenen Fertigungsanlage zur Kennzeichnung von Werkstücken dienen. Jedes der Werkstücke wird dabei mit einem mobilen Datenspeicher versehen. Beim Durchlauf des Werkstückes durch die vollautomatische Fertigung wird zum einen den einzelnen Fertigungsstationen die Art und der aktuelle Zustand des zu bearbeitenden Werkstückes mitgeteilt. Zum anderen wird nach erfolgter Bearbeitung der erreichte Werkstückzustand von der Bearbeitungsstation in den mobilen Datenspeicher des Werkstückes eingeschieben, und somit dessen Datensatz aktualisiert. Der das Werkstück auf seinem Weg durch die vollautomatische Fertigung begleitende mobile Datenspeicher ermöglicht somit zu jedem Zeitpunkt und an jede Stelle des Fertigungsprozesses eine sichere Identifikation des Werkstückes und von dessen aktuellem Bearbeitungszustand.

Die somit "Huckepack" auf jedem Werkstück die gesamte Fertigungsanlage mit durchlaufenden mobilen Datenspeicher müssen an vielen Stellen die Fertigungsanlage Daten mit dort ortsfest angebrachten Schreib- und/oder Lesegeräten austauschen.

Der Austausch von Befehlen und Daten muß ohne Kabel und Steckverbinder erfolgen, da ansonsten die Homogenität des Fertigungsablaufes z.B. durch das An- und Abkoppeln von kabelgebundenen Datenschnittstellen gestört werden würden.

Zum kabellosen Austausch von Daten ist aus der Deutschen Patentschrift DD 290 738 A5 bekannt eine "Anordnung für Sende- und/oder Empfangsspule aus Mehrebenenleiterplatte". Dabei ist jede Ebene mit zu Windungen zusammengefaßten Leiterzügen belegt, wobei die Ebenen voneinander isoliert und nicht zerstörungsfrei trennbar sind. Die Windungen auf den Ebenen sind mittels Durchkontaktierungen untereinander verbunden.

Eine derartige Anordnung kann entweder als eine Sendeantenne oder als eine Empfangsantenne dienen. Falls z.B. bei einem mobilen Datenträger in einem der oben genannten Identifikationssysteme eine Sende- und eine Empfangsantenne benötigt werden, müssen zwei getrennte derartige Anrodnungen eingesetzt werden. Dies hat den Nachteil, daß die Sende- und Empfangsanordnung nicht kompakt, sondern zweiteilig ist.

Bei einer Variante der bekannten Anordnung werden aus den Ebenen mehrere Spulenanschlüsse herausgeführt. Es können somit einzelne und/oder mehrere Windungen zu elektrisch voneinander getrennten Spulenwicklungen zusammengefaßt werden. In diesem Fall können z.B. Windungen auf Ebenen, die im oberen Bereich der Mehrebenenleiterplatte liegen, zu einer Sendeantenne zusammengeschaltet werden, und Windungen auf Ebenen, die darunterliegend im unteren Bereich der Mehrebenenleiterplatte liegen, zu einer Empfangsantenne zusammengeschaltet werden.

Eine derartige Anordnung hat den Nachteil, daß die Ebenen der Sende- und der Empfangsantenne übereinander liegen. Sollen z.B. sowohl die Sende- als auch die Empfangsantenne jeweils aus fünf Ebenen aufgebaut sein, so muß in diesem Fall die gesamte Mehrebenenleiterplatte mindestens zehn Ebenen aufweisen. Eine derartige Leiterplatte ist technologisch schwierig und nur kostenaufwendig herstellbar. Zudem ist die jeweilige Antenne nur in Richtung auf die dazugehörige freie Außenseite der Mehrebenenleiterplatte ausreichend empfindlich, während die Empfindlichkeit in Richtung auf die aufliegende andere Antenne eingeschränkt ist. Zudem ist die induktive Verkopplung zwischen Empfangs- und Sendeantenne groß und nicht einstellbar. Ein nicht unerheblicher Teil an Sendeenergie wird somit rückgekoppelt und geht in der eigenen Empfangsschaltung verloren. Zudem weist die Anordnung aufgrund der einem Plattenkondensator ähnlichen Gestaltung eine hohe Kapazität auf, welche die maximale Datenübertragungsfrequenz beschränkt.

Gegenüber diesem Stand der Technik liegt der Erfindung die Aufgabe zugrunde, eine Leiterplattenantenne anzugeben, welche bei möglichst kompaktem Aufbau über eine ausreichende Sende- und Empfangsreichweite verfügt.

Die Aufgabe wird mit der im Anspruch 1 angegebenen Leiterplattenantenne gelöst. Vorteilhafte weitere Ausführungsformen der Erfindung sind in den Unteransprüchen angegeben.

Die erfindungsgemäße Leiterplattenantenne weist den wesentlichen Vorteil auf, daß bei möglichst kompakter Raumform und insbesondere einer Mindestzahl an Lagen in der Leiterplatte eine Leiterplattenantenne aufgebaut werden kann, welche eine große Empfangs- und Sendereichweite aufweist. Zudem ist die Empfangs- und Sendeempfindlichkeit in Richtung auf beide Außenseiten der Leiterplatte identisch.

Die erfindungsgemäße Leiterplattenantenne weist eine Vielzahl von weiteren Vorteilen auf. Auf Grund der zur Hilfenahme der Technologie der mehrlagigen Leiterplatten, ist es zum einen möglich eine kostengünstige Antennenanordnung aufzubauen. Auf Grund der Einbettung von deren Teilspulen zwischen die Lagen in das Innere der als Träger dienenden Leiterplatte entsteht ferner ein äußest robuster Aufbau mit sehr kompakten äußeren Abmessungen. Zum Aufbau der Leiterplattenantenne können die bekannten, zur Herstellung mehrlagiger Leiterplatten benötigten Verfahrensschritte herangezogen werden. Ferner erfolgt die reihenartige Zusammenschaltung der übereinander liegenden Teilspulen im Inneren der mehrlagigen Leiterplatte zu einer mehrlagigen Antenne auf einfache Weise mit Hilfe von konventionellen Durchkontaktierungen durch die Leiterplatte. Zudem bietet die erfindungsgemäße Leiterplattenantenne den Vorteil, die im jeweiligen Anwendungsfall benötigte Empfangs- und Sendereichweite auf einfache Weise dadurch einzustellen, daß eine größere oder kleinere Anzahl von mit Teilspulen belegten Lagen zu der mehrlagigen Leiterplattenantenne verpreßt werden. Beispielhaft kann eine erfindungsgemäß aufgebaute Leiterplattenantenne aus acht bis sechzehn mit Teilspulen belegten, übereinander liegenden Teillagen bestehen. Die flächigen Teilspulen auf der Oberfläche einer jeden Lage können dabei im einfachsten Fall durch in konventioneller Weise auf dem Trägermaterial aufgebrachten Leiterbahnen gebildet werden.

Die Erfindung wird ferner an Hand von zwei in den nachfolgend kurz angeführten Figuren dargestellten Ausführungsbeispielen näher erläutert. Dabei zeigt
- FIG 1:: eine Schnittdarstellung durch eine beispielhafte, vierlagige Leiterplattenantenne, welche pro Lage jeweils zwei ineinander liegende Teilspulen aufweist, die zu einer Sende- und einer Empfangsantenne zusammengeschaltet sind,
- FIG 2:: eine Draufsicht auf die Teilspulen der ersten Lage einer beispielhaften, zweilagigen Leiterplattenantenne, und
- FIG 3:: eine Draufsicht auf die darunter liegende zweite Lage der Leiterplattenantenne von FIG 2.

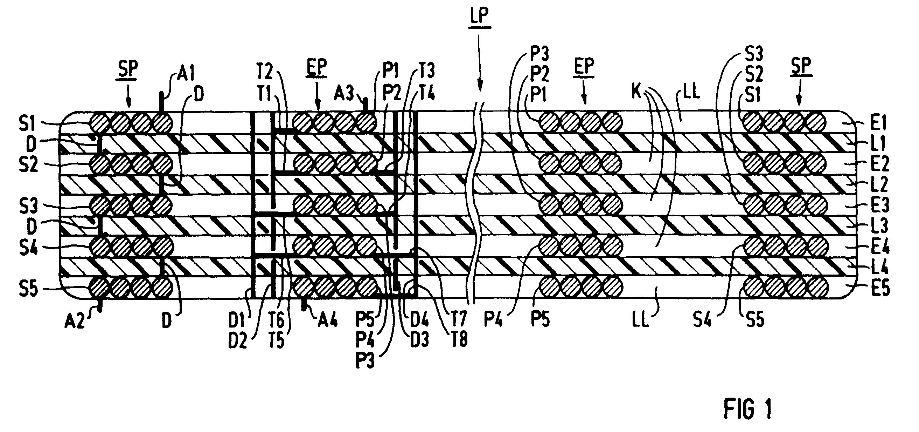

Die in FIG 1 dargestellte, mehrlagige Leiterplatte LP besteht beispielhaft aus vier Lagen L1...L4. Diese bestehen bevorzugt aus herkömmlichem Trägermaterial und sind in bekannter Weise zu der Leiterplatte LP verbunden. Diese weist somit fünf Trägerebenen E1 ...E5 auf. Die Oberflächen dieser Lage L1...L4 sind derartig mit Leiterbahnen belegt, daß sich flächige Teilspulen S1...S5 ergeben. Im Beispiel der FIG 1 weist jede dieser Teilspulen vier Windungen auf. Diese sind ferner derart auf den Lagen eingebettet, daß die Teilspulen möglichst übereinander zu liegen kommen. Zur Einbettung dienen bevorzugt zur Herstellung mehrlagiger Leiterplatten übliche Klebeschichten K, beziehungsweise Abdeckschichten LL. So sind im Beispiel der FIG 1 Teilspulen S2, S3, S4 zwischen den Lagen L1...L4 in Klebeschichten K eingebettet. Ferner sind die außenliegenden Teilspulen S1, S5 auf den Außenseiten der Lagen L1, L4 in Abdeckschichten LL eingebettet, welche z.B. aus Lötstoplack bestehen können.

Die Teilspulen S1...S5 sind schließlich mit Hilfe von Durchkontaktierungen D zu einer mehrlagigen Antenne SP in Reihe zusammengeschaltet. Im Beispiel der FIG 1 dienen zur Zusammenschaltung partielle Durchkontaktierungen D, welche jeweils Anfang und Ende der Teilspulen S1...S5 über die einzelnen Lagen L1...L4 hinweg miteinander verbinden. Die Kontakte A1, A2 auf den außenliegenden Ebenen E1, E5 dienen als externe Anschlüsse für die Leiterplattenantenne SP.

Der äußest kompakte Aufbau der erfindungsgemäßen mehrlagigen Leiterplattenantenne ist am Beispiel der FIG 1 deutlich zu erkennen. So weist diese trotz der Viellagigkeit eine Stärke auf, die im Prinzip der Stärke einer herkömmlichen Leiterplatte mit entsprechend vielen Trägerebenen entspricht. Die Reichweite der Antenne SP kann durch Anpassung der Windungszahlen der Teilspulen S1...S5 auf den einzelnen Lagen und durch Variation der Anzahl der zur Leiterplattenantenne zur verpressenden Lagen eingestellt werden.

Wird eine erfindungsgemäß aufgebaute Leiterplattenantenne als eine Empfangsantenne eingesetzt, so weist diese bevorzugt acht Lagen auf. Jede dieser Lage ist mit einer Teilspule belegt, welche ca. vierzig bis sechzig Windungen aufweist. Wird in einem anderen Fall eine Leiterplattenantenne als eine Sende verwendet, so weisen die Teilspulen bei einem ebenfalls achtlagigen Aufbau bevorzugt Windungszahlen zwischen acht und zwanzig auf. Derartige Leiterplattenantennen können einen Außendurchmesser von weniger als vierzig Millimeter aufweisen.

Gemäß der Erfindung sind die Lagen der Leiterplatte derart mit Leiterbahnen belegt, daß sich pro Lage getrennte Teilspulen für mindestens eine Sendeantenne und Teilspulen für mindestens eine Empfangsantenne ergeben. Die zu Teilspulen verbundenen Leiterbahnen sind wiederum derart auf den Lagen eingebettet, daß die zur Sendeantenne und zur Empfangsantenne gehörigen Teilspule jeweils möglichst übereinander zu liegen kommen. Die getrennten Teilspulen sind schließlich mit Hilfe von Durchkontaktierungen zum Aufbau jeweils einer gesamten mehrlagigen Sende- und Empfangsantenne in Reihe zusammengeschaltet. Bevorzugt sind in diesem Fall die Leiterbahnen pro Lage derart zu Teilspulen verbunden, daß sich jeweils zwei getrennte, insbesondere annähernd konzentrisch ineinander liegende Teilspulen für die Sende- und die Empfangsantenne ergeben.

In FIG 1 ist bereits beispielhaft eine erfindungsgemäße, aus einer kombinierten Sende- und Empfangsspule bestehende mehrlagige Leiterplattenantenne LP dargestellt. In jeder Trägerebene E1...E5 sind somit jeweils zwei ineinander liegende Teilspulen S1, P1...S5, P5 übereinander liegend angeordnet. Die einzelnen Teilspulensätze S1...S5 und P1...P5 sind zu je einer Sende- und Empfangsantenne SP, EP in Reihe zusammengeschaltet. Bevorzugt sind pro Lage L1...L4 der Leiterplatte LP die Teilspulen S1...S5 der Sendeantenne SP außenliegend und die Teilspulen P1...P5 der Empfangsantenne EP innenliegend angeordnet.

Die Erfindung weist den Vorteil auf, daß trotz der Verteilung der Teilspulen von Sende- und Empfangsantenne auf die lagen der Leiterplatte LP aufgrund von deren ineinanderliegender Anordnung eine nur geringe induktive Kopplung zwischen beiden Antennen auftritt. Beide Antennen weisen in Richtung auf die als Außenseiten der Leiterplatte LP dienenden Trägerebenen E1 und E5 die gleiche Empfindlichkeit auf. Ein besonderer Vorteil der erfindungsgemäßen Anordnung besteht auch darin, daß der Verkopplung durch Auswahl von Größe, Leiterbahnabstand und relative Lage der Teilspulen von Sende- zu Empfangsantenne anwendungsabhängig eingestellt werden kann.

Im Beispiel der FIG 1 dienen zur Zusammenschaltung der Teilspulen P1...P5 zur Empfangsantenne EP Durchkontaktierungen D1...D4, welche alle Lagen L1...L4 der Leiterplatte LP von der Oben- bis zur Unterseite durchdringen. So dienen in FIG 1 die Kontakte A3, A4 zum äußeren Anschluß der Empfangsantenne EP. Das Ende von deren erster Teilspule P1 ist beispielhaft über einen ersten Leiterbahnsteg T1 auf der Oberseite von L1, über die Durchkontaktierung D2 und über einen zweiten Leiterbahnsteg T2 auf der Oberseite von L2 mit dem Anfang der darunter liegenden Teilspule P2 verbunden. In entsprechender Weise ist das Ende von P2 über den Steg T3 auf L2, die Durchkontaktierung D3 und den Steg T4 auf L3 mit dem Anfang der darunter liegenden Teilspule P3 verbunden. In entsprechender Weise dienen zur Verbindung der Teilspulen P3 mit P4 und P4 mit P5 die Elemente T5, D1, T6 und T7, D4, T8.

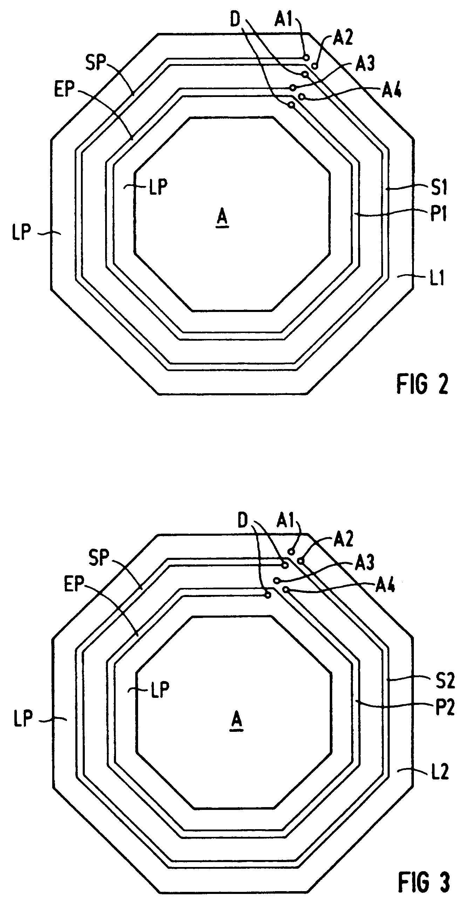

In den Figuren 2, 3 ist ein weiteres Beispiel für eine erfindungsgemäß aufgebaute Leiterplattenantenne dargestellt. Die Leiterplatte LP weist dabei beispielhaft die beiden Lagen L1 und L2 auf. So zeigt FIG 2 eine Draufsicht auf die erste Lage L1, und FIG 3 eine Draufsicht auf die zweite Lage L2. Die Leiterplatte LP hat bevorzugt eine sechseckige Form und weist einen Innenausschnitt A als zentrale Öffnung auf. Die ringförmigen, sechseckigen Flächen der einzelnen Lagen sind mit den außenliegenden Teilspulen einer Sendeantenne SP und den innenliegenden Teilspulen einer Empfangsantenne EP belegt.

So bilden in FIG 2 die Leiterbahnen auf der Oberfläche der Lage L1 die ineinander liegenden Teilspulen S1 und P1. In entsprechender Weise bilden in FIG 3 die Leiterbahnen auf der Oberfläche von L2 die ineinander liegenden Teilspulen S2 und P2. Die Teilspulen S1, S2 und P1, P2 sind jeweils übereinander liegend angeordnet und mit Hilfe von Durchkontaktierungen D durch die gesamte Leiterplatte LP hindurch in Reihe zu einer mehrlagigen Sendespule SP bzw. Empfangsspule EP zusammengeschaltet. So stellt die Durchkontaktierung A1 den Kontakt am Anfang der Sendespule SP dar. Von A1 verlaufen die Windungen der Teilspule S1 auf L1 bis zur Durchkontaktierung D, welche auf der darunter liegenden Lage L2 wiederum den Anfang der Teilspule S2 darstellt. Die Leiterbahnen dieser Teilspule enden in der Durchkontaktierung A2, welche den zweiten, äußeren Anschluß der Sendespule SP bildet. In entsprechender Weise beginnen in FIG 2 die innenliegenden Leiterbahnen der Teilspule P1 der Empfangsantenne EP auf der ersten Leiterplattenlage L1 bei der Durchkontaktierung A3 und enden bei einer weiteren Durchkontaktierung D. Diese dient in FIG 3 wiederum als Beginn für die Leiterbahnen der darunter liegenden, zweiten Teilspule P2. Diese endet schließlich in der Durchkontaktierung A4, welche wiederum den zweiten, äußeren Anschluß der Empfangsantenne EP darstellt.

Selbstverständlich ist die erfindungsgemäße, mehrlagige Leiterplattenantenne nicht auf die in den Figuren 1 bis 3 dargestellten Ausführungsbeispiele beschränkt. Vielmehr können entsprechend den im jeweiligen Anwendungsfall zur Verfügung stehenden Einbaugegebenheiten und den jeweiligen Anforderungen an die Reichweite der Leiterplattenantenne die Anzahl der miteinander verbundenen Lagen, die Anzahl der Windungen der Teilspulen pro Lage, die Anzahl separater Teilspulen pro Lage und auch die Form der Teilspulen anwendungsabhängig ausgewählt werden. Bei all diesen Ausführungen kommt das der Erfindung zugrundeliegende Prinzip der Einbettung übereinander liegender und über Durchkontaktierungen in Reihe geschalteter Teilspulen im Inneren einer mehrlagigen Leiterplatte zur Anwendung.

Gemäß einer weiteren Ausführung der Erfindung wird der Abstand der zur Sende- und zur Empfangsantenne gehörigen Teilspulen pro Lage so ausgewählt, daß sich eine sogenannte "schwache induktive Kopplung" zwischen Sende- und Empfangsantenne ergibt. Hierdurch wird erreicht, daß der größte Teil der von der Sendeantenne abgestrahlten Energie zur eigentlichen Datenübertragung zur Verfügung steht, und nur ein kleiner Teil der Sendenergie in die Empfangsantenne rückgekoppelt und in einer dort nachgeschalteten Eingangsschutzbeschaltung verloren geht. Wäre demgegenüber die induktive Kopplung der Lagenantennen groß, so würde ein zu großer Teil der Sendeenergie verloren gehen und es wäre somit die Sendereichweite eingeschränkt. Der Grad der Verkopplung wird eingestellt durch Auswahl des Abstandes der zur Sende- und Empfangsantenne gehörigen Teilspulen pro Lage der Leiterplatte. Weisen z.B. die Leiterbahnen einer zur Empfangsantenne gehörigen Teilspule auf einer Lage einen radialen Abstand von ca. 0,3 mm auf, so wird in diesem Fall eine schwache induktive Kopplung erreicht, wenn pro Lage der Leiterplatte die zur Sende- und Empfangsantenne gehörigen Teilspulen einen radialen Abstand von ca. 1 mm aufweisen.

Die erfindungsgemäße Einstellung einer schwachen induktiven Kopplung zwischen der Sende- und Empfangsantenne kann besonders vorteilhaft in einer sogenannten Hardware-Selbsttest-Schaltung ausgenutzt werden. In diesem Fall wird ein Teil der Sendeenergie durch ständigen "Mithören" der eigenen Empfangsantenne umgeleitet. Der Empfang der von der eigenen Sendeantenne verursachten Datenabstrahlung kann in der Überwachungsschaltung ausgewertet werden. Hiermit ist es leicht möglich, alle Bestandteile der Datenübertragungsvorrichtung ständig auf Funktionsfähigkeit zu überwachen. In diesem Fall ist es besonders vorteilhaft, aufgrund der erfindungsgemäßen Einstellung einer "schwachen induktiven Kopplung" zwischen Empfangs- und Sendeantenne die zu Verfügung stehende Sendeenergieleistung geringfügig durch die induktive Kopplung zu begrenzen.

## Patentansprüche

1. Leiterplattenantenne mit einer mehrlagigen Leiterplatte (LP), deren Lagen (L1,E1...L4,E4) mit zu flächigen Teilspulen verbundenen Leiterbahnen derart belegt sind, daß
a) pro Lage (L1,E1...L4,E4) jeweils zwei getrennte, ineinander liegende Teilspulen (S1...S5; P1...P5) für eine Sendeantenne (SP) und eine Empfangsantenne (EP) entstehen,
b) die zur Sendeantenne (SP) und Empfangsantenne (EP) pro Lage gehörigen Teilspulen (S1...S5; P1...P5) in der Leiterplatte (LP) möglichst übereinander liegen, und
c) die Teilspulen (S1...S5; P1...P5) mit Hilfe von Durchkontaktierungen (D; D,D1...D4) zu jeweils einer mehrlagigen Sende- und Empfangsantenne (SP; EP) in Reihe zusammengeschaltet sind (Fig.1-3).

2. Leiterplattenantenne nach Anspruch 1, wobei pro Lage (L1...L4) der Leiterplatte (LP) die Teilspulen (S1...S5) der Sendeantenne (SP) außenliegend und die Teilspulen (P1...P5) der Empfangsantenne (EP) innenliegend angeordnet sind.

3. Leiterplattenantenne nach Anspruch 1 oder 2, wobei pro Lage (L1...L4) der Leiterplatte (LP) die getrennten Teilspulen (S1...S5; P1...P5) der Sende- und Empfangsantenne (SP; EP) annähernd kreisförmig sind und konzentrisch ineinander liegen.

4. Leiterplattenantenne nach einem der vorangegangenen Ansprüche, wobei der radiale Abstand der zur Sende- und Empfangsantenne (SP; EP) gehörigen Teilspulen (S1...S5; P1...P5) pro Lage (L1...L4) der Leiterplatte (LP) derart ausgewählt wird, daß sich eine schwache induktive Verkopplung zwischen der Sende- und Empfangsantenne auf der Leiterplatte (LP) ergibt.

## Claims

1. Printed-circuit board antenna having a multi-layer printed-circuit board (LP) whose layers (L1, E1 ... L4, E4) are covered with printed conductors connected to form flat coil sections in such a way that
(a) per layer, two respective separate coil sections (S1 ... S5; P1 ... P5) located one inside another result for a transmitting antenna (SP) and a receiving antenna (EP),
(b) the coil sections (S1 ... S5; P1 ... P5) belonging, per layer, to the transmitting antenna (SP) and to the receiving antenna (EP), are located in the printed-circuit board (LP) one above another as precisely as possible, and
(c) the coil sections (S1 ... S5; P1 ... P5) are connected together in series with the aid of throughplating (D; D, D1 ... D4) to form a respective multi-layer transmitting antenna and receiving antenna (SP; EP).

2. Printed-circuit board antenna according to claim 1, wherein, per layer (L1 ... L4) of the printed-circuit board (LP), the coil sections (S1 ... S5) of the transmitting antenna (SP) are arranged on the outside and the coil sections (P1 ... P5) of the receiving antenna (EP) are arranged on the inside.

3. Printed-circuit board antenna according to claim 1 or 2, wherein, per layer (L1 ... L4) of the printed-circuit board (LP), the separate coil sections (S1 ... S5; P1 ... P5) of the transmitting antenna and receiving antenna (SP; EP) are approximately circular and are located concentrically one inside another.

4. Printed-circuit board antenna according to one of the preceding claims, wherein the radial spacing of the coil sections (S1 ... S5; P1 ... PS) belonging to the transmitting antenna and receiving antenna (SP; EP), per layer (L1 ... L4) of the printed-circuit board (LP), is selected in such a way that a weak stray inductive coupling results on the printed-circuit board (LP) between the transmitting antenna and the receiving antenna.

## Revendications

1. Antenne à plaquette à circuits imprimés, comportant une plaquette à circuits imprimés multicouche (LP), dont les couches (L1,E1 à L4,E4) sont occupées par des pistes conductrices reliées à des bobines partielles plates, de telle sorte que
a) pour chaque couche (L1,E1 à L4,E4) , deux bobines distinctes et situées l'une dans l'autre (S1 à S5; P1 à P5) sont prévues pour une antenne d'émission (SP) et pour une antenne de réception (EP),
b) les bobines partielles (S1 à S5; P1 à P5), qui sont associées, pour chaque couche, à l'antenne d'émission (SP) et à l'antenne de réception (EP), sont autant que possible superposées dans la plaquette à circuits imprimés (LP), et
c) les bobines partielles (S1 à S5; P1 à P5) sont interconnectées en série à l'aide de contacts traversants (D; D,D1 à D4) aboutissant à une antenne d'émission et de réception multicouche (SP; EP). (Figures 1 à 3).

2. Antenne à plaquette à circuits imprimés suivant la revendication 1, dans laquelle pour chaque couche (L1 à L4) de la plaquette à circuits imprimés (LP), les bobines partielles (S1 à S5) de l'antenne d'émission (SP) sont disposées à l'extérieur et les bobines partielles (P1 à P5) de l'antenne de réception (EP) sont disposées à l'intérieur.

3. Antenne à plaquette à circuits imprimés suivant la revendication 1 ou 2, dans laquelle, pour chaque couche (L1 à L4) de la plaquette à circuits imprimés (LP), les bobines partielles distinctes (S1 à S5; P1 à P5) de l'antenne d'émission et de réception (SP; EP) ont une forme approximativement circulaire et sont disposées concentriquement l'une dans l'autre.

4. Antenne à plaquette à circuits imprimés suivant l'une des revendications précédentes, dans laquelle la distance radiale des bobines partielles (S1 à S5; P1 à P5), qui sont associées à l'antenne d'émission et l'antenne de réception (SP; EP) est choisie, pour chaque couche (L1 à L4) de la plaquette à circuits imprimés (LP) de sorte à obtenir un couplage inductif faible entre l'antenne d'émission et l'antenne de réception sur la plaquette à circuits imprimés (LP).
